# EUROPEAN PATENT SPECIFICATION

(11) **EP 1 298 294 B1**
(45) Date of publication and mention of the grant of the patent: **27.12.2006**
(21) Application number: 02021738.6
(22) Date of filing: 25.09.2002
(51) Int. Cl.: F02B 23/10, F02F 3/26, F02B 31/08

(54) **Piston for a direct-injection spark-ignition engine and a direct-injection spark-ignition engine equipped with the piston**
Kolben für eine Verbrennungskraftmaschine mit Benzindirekteinspritzung und Verbrennungskraftmaschine mit solchen Kolben
Piston pour un moteur à injection directe d'essence et moteur ayant un tel piston

(30) Priority: 28.09.2001 JP 2001303100
(43) Date of publication of application: 02.04.2003
(73) Proprietor: Mazda Motor Corporation, Aki-gun, Hiroshima 730-8670 (JP)
(72) Inventor: Ohta, Noriyuki, Aki-gun, Hiroshima 730-8670 (JP); Yoshida, Hiroyuki, Aki-gun, Hiroshima 730-8670 (JP); Yamashita, Hiroyuki, Aki-gun, Hiroshima 730-8670 (JP)
(74) Representative: Müller-Boré & Partner Patentanwälte

(56) References cited:
- EP-A- 0 921 287
- PATENT ABSTRACTS OF JAPAN vol. 1999, no. 13, 30 November 1999 (1999-11-30) & JP 11 223127 A (TOYOTA CENTRAL RES &DEV LAB INC; TOYOTA MOTOR CORP), 17 August 1999 (1999-08-17)
- PATENT ABSTRACTS OF JAPAN vol. 2000, no. 09, 13 October 2000 (2000-10-13) & JP 2000 179344 A (YAMAHA MOTOR CO LTD), 27 June 2000 (2000-06-27)
- PATENT ABSTRACTS OF JAPAN vol. 2000, no. 01, 31 January 2000 (2000-01-31) & JP 11 294307 A (NISSAN MOTOR CO LTD), 26 October 1999 (1999-10-26)
- PATENT ABSTRACTS OF JAPAN vol. 2000, no. 08, 6 October 2000 (2000-10-06) & JP 2000 130171 A (NISSAN MOTOR CO LTD), 9 May 2000 (2000-05-09)

## Description

This invention relates to a piston for a direct-injection spark-ignition engine equipped with a fuel injector directly injecting fuel into a combustion chamber, and to a direct-injection spark-ignition engine equipped with the piston.

Conventionally, a direct-injection spark-ignition engine has been known, which comprises a fuel injector directly injecting fuel into a combustion chamber, and controls the fuel injector to inject fuel during a compression stroke so as to concentrate a mixture in the proximity of a spark plug and cause the stratified combustion with leaner air-fuel ratio of the stoichiometric air-fuel ratio in a condition of low engine-load and low engine-rotational speed, for improving fuel efficiency. Japanese Patent Publication No. H11-294307 discloses such a direct-injection spark-ignition engine, in which fuel is conveyed to the proximity of the spark plug by a tumble flow after injected into the combustion chamber from the fuel injector disposed on a peripheral wall of the combustion chamber, and the amount of the amount of the protrusion of the spark plug is adjusted according to an engine operational condition.

In accordance with the constitution described in the patent publication described above, the following advantages are attained:
In a condition of high engine-load and high engine-rotational speed where the engine operates on the homogeneous-combustion mode with intake-stroke injection, the amount of the protrusion of the spark plug is reduced for large amount of the injected fuel in the homogeneous-combustion mode, which prevents the wetting of the plug and the incomplete ignition due to the spark plug directly exposed to the fuel spray, thereby stabilizing the homogeneous combustion for high engine-output and improved emission performance.

On the other hand, in low and middle engine-load and low and middle engine-rotational speed where the engine operates on the stratified-combustion mode with compression-stroke injection, the amount of the protrusion of the spark plug is increased, which ensures that the fuel is conveyed to the proximity of the spark plug, thereby improving engine-output and emission performance without any additional structure for causing the fuel spray to collide with the top surface of the piston.

In the constitution as above, which controls the protrusion of the spark plug according to the engine operational condition, however, a protruding mechanism for the spark plug is required at the upper portion of the combustion chamber. This complicates the engine structure and inevitably increases the engine size. Moreover, the increased amount of the spark-plug protrusion in the stratified-combustion mode inevitably causes the more amount of the fuel to deposit on an electrode in the form of droplets. This results in that the spark plug is cooled by the evaporation of the droplets and heated by the ignition repeatedly, which may prevent the spark plug from reliable ignition.

JP 11-223 127 discloses a direct-injection spark-ignition engine comprising a piston. In this piston, a cavity is formed such that a tumble flow may flow along a bottom surface of the cavity. Further, a step for guiding the tumble flow and the injected fuel upwardly is also formed on the top surface of the piston. The fuel is injected at the opposite side to the step with respect to the cylinder axis and flows together with the air along the bottom surface of the cavity via the step towards the spark plug.

EP-A-0 921 287 discloses another example of a direct-injection spark-ignition engine comprising a piston in which a cavity is formed. In particular, this piston comprises a further cavity having a smaller width as the first cavity and being connected with the same. The fuel injector is disposed above the further cavity, so that the fuel spray collides with the tumble flow flowing from the further cavity toward the spark plug.

It is the object of the invention to provide a direct-injection spark-ignition engine having a favourable ignitability and combustion of a stratified mixture in a lean operation mode of the engine, such that the fuel efficiency and emissions are improved.

This object is fulfilled by a direct-injection spark-ignition engine having the features disclosed in claim 1. Preferred embodiments are defined in the dependent subclaims.

According to the invention, there is provided a direct-injection spark-ignition engine, in which its intake system is so configured to produce a tumble flow in a combustion chamber and comprising a fuel injector disposed on or near the peripheral or lateral portion of a roof or upper portion of the combustion chamber, wherein a piston is formed with a cavity having a bottom surface along which the tumble flow can flow and extending to both sides of the cylinder axis on the top surface of the piston; and a step or stepped or slanted portion provided on a fuel-injector side (or intake-valve side) of the cylinder axis on the bottom surface of the cavity for guiding the tumble flow upwardly. The fuel injector injects fuel so that injected fuel substantially confronts against and/or intersects at an obtuse angle the tumble flow produced in the combustion chamber in such a manner that the mixture is concentrated in the proximity of the spark plug and ignited.

Thus, according to the present invention, a simple piston structure for a direct-injection spark-ignition engine is provided which can properly stratify the mixture in the proximity of the spark plug in the stratified-combustion operation, without impairing the reliable ignition of the spark plug.

According to a preferred embodiment of the present invention, there is provided a direct-injection spark-ignition engine in which its intake system is so configured to produce a tumble flow in a combustion chamber, a central portion of a roof of the combustion chamber is located at the higher level than its peripheral portion, a spark plug is disposed in the central portion, a fuel injector is disposed on the periperhal portion of a roof of the combustion chamber (e.g. the left side of the central portion), and the fuel injector injects fuel so that injected fuel substantially confronts against and/or intersects at an obuse angle the tumble flow produced in the combustion chamber in such a manner that the mixture is concentrated in the proximity of the spark plug and ignited, wherein, the piston is formed with: a cavity having a bottom surface along which the tumble flow flows and extending to both sides of the cylinder axis on the top surface of the piston; and a step provided on the left side (fuel-injector or intake-valve side) of the cylinder axis on the bottom surface of the cavity for guiding the tumble flow upwardly.

Accordingly, when the engine operates on the stratified combustion mode, the fuel spray injected by the fuel injector during the compression stroke and the tumble flow flowing along the cavity on the top surface of the piston confront against each other. Thus, the fuel is promoted to atomize and mix with air, and then the mixture is moved upwardly so as to be concentrated in the proximity of the spark plug.

Preferably, a shelf may be provided which continues from the upper edge of the step formed on the top surface of the piston, extends in parallel with the bottom surface of the cavity, and is located below the level of the opening ridge of the cavity.

Accordingly, when the engine operates on the stratified combustion mode, the fuel injected by the fuel injector during the compression stroke is prevented from depositing on the step and the shelf formed on the top surface of the piston, without impairing the guiding effect for the tumble flow by means of the step formed on the top surface of the piston.

Preferably, the top edge of the shelf may be located below the fuel-spray area when the piston is in place at the starting timing of the fuel injection in the stratified-combustion operation mode.

Accordingly, the fuel injected by the fuel injector during the compression stroke is reliably prevented from depositing on the top surface of the piston in the stratified combustion mode, without impairing the guiding effect for the tumble flow by means of the step formed on the top surface of the piston.

Preferably, the distance between an opening ridge on the opposite side to the fuel-injector side of said cavity (e.g. a right opening ridge of the cavity on the top surface of the piston) and the periphery of the piston may be greater than the distance between an opening ridge on the fuel-injector side of said cavity (e.g. a left opening ridge and the periphery of the piston).

Accordingly, the tumble canter is effectively prevented from laterally shifting (e.g. to the left) during the compression stroke in the cross-section, and the weakening of the tumble flow is suppressed.

These and other objects, features, aspects, and advantages of the present invention will become more apparent from the following detailed description of the preferred embodiment relative to the accompanied drawings, in which:
FIG. 1 is a schematic diagram showing a piston structure of a direct-injection spark-ignition engine according to the present invention.
FIG. 2 is a block diagram showing a detailed structure of a fuel delivery system.
FIG. 3 is a diagram showing a cone angle of the fuel spray and the spray penetration.
FIG. 4 is a cross sectional view of the significant portion of a main body of the engine.
FIG. 5 is a cross-sectional view showing the detailed shape of the piston.
FIG. 6 is a plan view showing the detailed shape of the piston.
FIG. 7 is a plan view showing the aspect of the fuel injection.
FIG. 8 is a chart showing a control map showing the engine operational region.
FIG. 9 is a view graphically showing the change in the tumble flow in the comparison example.
FIG. 10 is a view graphically showing the change in the tumble flow in the embodiment of the present invention.
FIG. 11 is a view graphically showing the change in the mixture in the comparison example.
FIG. 12 is a view graphically showing the change in the mixture in the embodiment of the present invention.
FIG. 13 is a graph char showing the change in fuel efficiency with respect to the ignition timing.
FIG. 14 is a graph chart showing the change in combustion stability with respect to the ignition timing.
FIG. 15 is a view showing the change in the center of the tumble flow with respect to the position of the piston in the comparison example.
FIG. 16 is a view showing the change in the center of the tumble flow with respect to the position of the piston in the embodiment of the present invention.

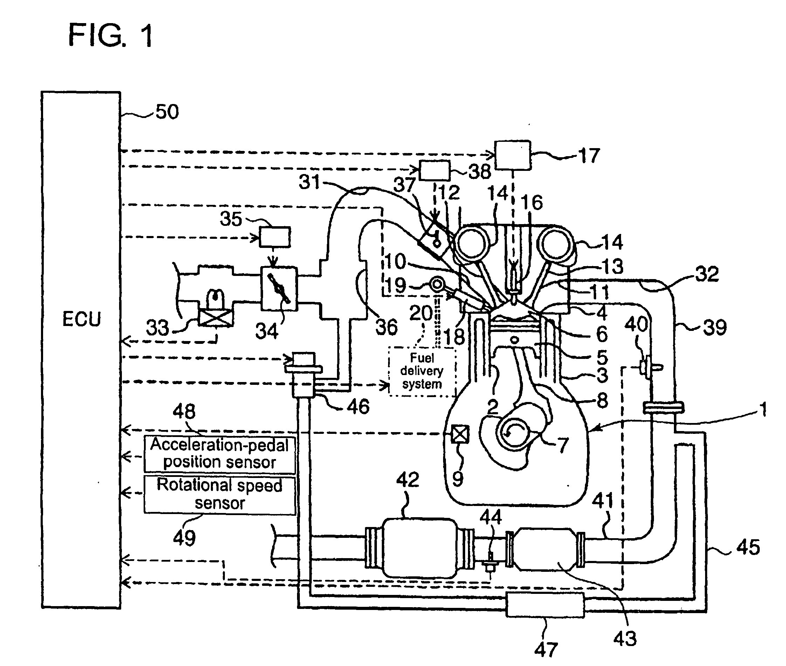

FIG. 1 illustrates an overall structure of a direct-injection spark-ignition engine 1 equipped with a piston 5 in accordance with a preferred embodiment of the present invention. As illustrated in the drawing, a main body of the engine 1 comprises a cylinder block 3 formed with a plurality of cylinders 2, a cylinder head 4 mounted on the cylinder block 3, a piston 5 fitted within each cylinder 2 so as to reciprocate preferably substantially in the vertical direction. A combustion chamber 6 is defined between the piston 5 and the cylinder head 4. The piston 5 is connected to a crankshaft 7 rotatably supported at the lower portion of the cylinder block 3 via connecting rod 8. At an end of the crankshaft 7, an electromagnetic crank-angle sensor 9 is provided for detecting a crank angle (or a rotation angle of the crankshaft).

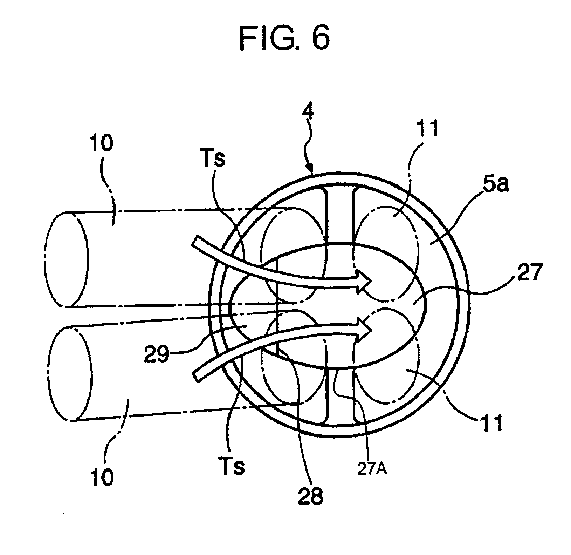

The combustion chamber 6 of each cylinder 2 is of a so-called bent-roof type, the roof of which comprises, preferably substantially consists of two slant faces each extending from the substantially central portion of the roof to the lower surface of the cylinder head 4. Two intake ports 10 and two exhaust ports 11 open on the two slant surfaces of the roof of the combustion chamber 6, respectively (refer to FIG. 6). An intake valve 12 and an exhaust valve 13 are disposed at the opening edge of the respective ports 10 and 11. The intake valve 12 the exhaust 13 open and close at a predetermined timing for corresponding cylinders 2, driven or controlled by a valve-driving or valve-controlling mechanism 14 comprising two camshafts 14 rotatably supported at the upper portion of the cylinder head 4.

At the central top portion of the combustion chamber 6, a spark plug 16 is fitted preferably so as to be substantially surrounded by the four valves of two intake valves 12 and two exhaust valves 13. A tip of the spark plug 16 projects into the combustion chamber 6. The spark plug 16 is electrically connected to an ignition circuit 17 which energizes the spark plug 16 at a predetermined timing for corresponding cylinders 2.

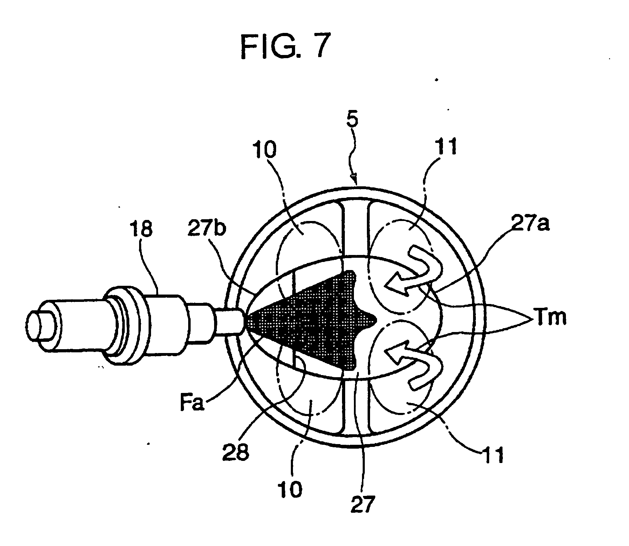

On a peripheral wall of the cylinder 6, a fuel injector 18 is disposed preferably between the two intake ports 10. The fuel injector 18 directly injects fuel into the combustion chamber 6 (refer to FIG. 7). The proximal end of the fuel injector 18 is connected to a fuel distribution pipe 19 which distributes high-pressure fuel delivered from a fuel delivery system 20 for or to each cylinder 2.

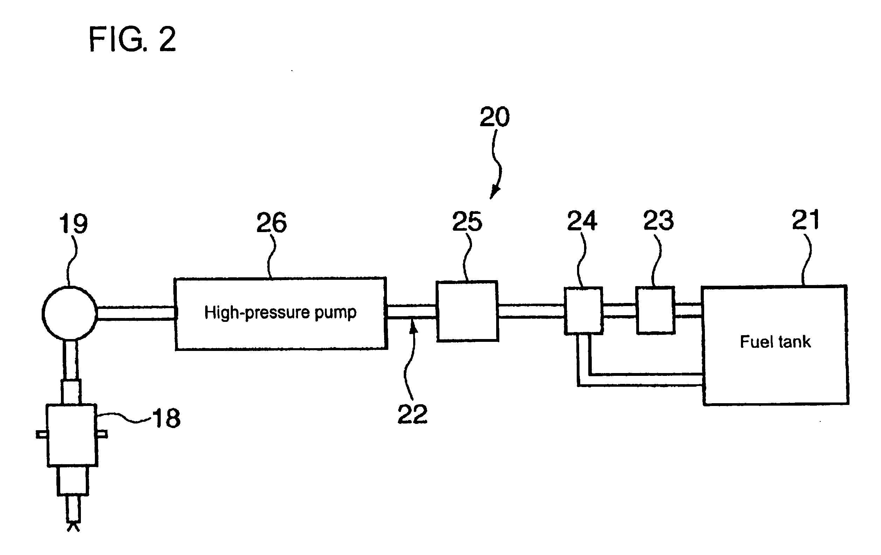

As shown in FIG. 2, the fuel delivery system 20 includes a fuel passage 22 which communicates the fuel distribution pipe 19 with a fuel tank 21. In the fuel passage 22, a low-pressure pump 23, low-pressure regulator 24, a fuel filter 25 and a high-pressure pump 26 are disposed from the upstream side of the fuel passage 22. Fuel is sucked from the fuel tank 21 by the low-pressure pump 23, regulated its pressure by the low-pressure regulator 24, filtered through the fuel filter 25 and then fed into the high-pressure pump 26. The high-pressure pump 26 is an electromagnetic valve which can broadly adjust the amount of the discharged fuel, for example. By adjusting the amount of the fuel discharged into the fuel distribution pipe 19, the high-pressure pump 26 provides a desired spray pressure of the fuel (preferably approximately ranging from 3 MPa to 13 MPa, preferably, 4 MPa to 7 MPa, for example). Alternatively, a high-pressure regulator may be provided, which partly returns fuel pressurized by the high-pressure pump 26 to the fuel tank 21 through a return passage for providing a desired pressure of the fuel discharged into the fuel distribution pipe 19.

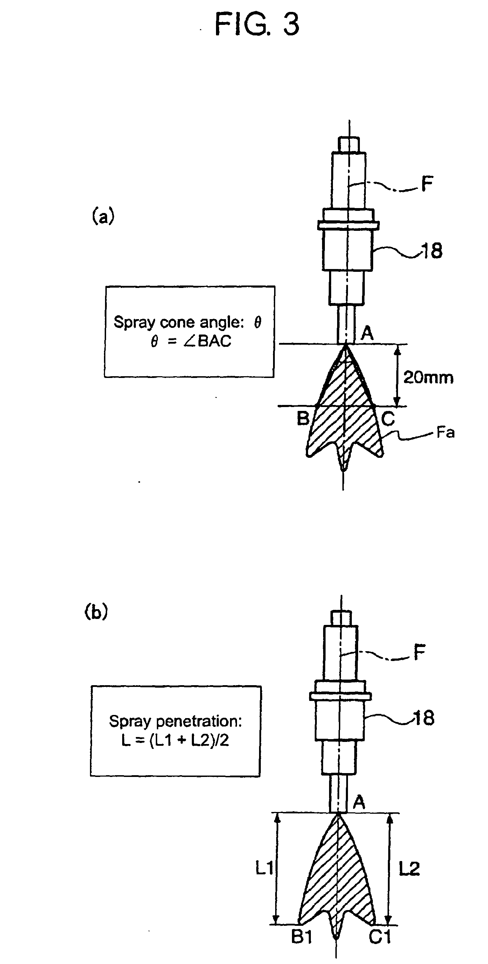

The fuel injector 18 comprises an injection nozzle which injects a fuel spray Fa with a spray cone angle θ preferably equal to or less than 70 °, for example about 30 °. The spray cone angle θ varies with the pressure condition in the combustion chamber 6. In this embodiment, however, two points B and C are determined at which assumed plane through the spray center line F and the profile of fuel spray Fa interconnect with each other at a downstream portion from an injection bore A of the fuel injector by 20 mm, and ∠BAC is defined as the spray cone angle θ, as illustrated in FIG. 3 (a).

Additionally, as illustrated in FIG. 3 (b), in the assumed plane including the spray center line F, the leading edges of the primary spray (or fuel droplet area) excluding a so-called premature spray (or initial spray) are defined as point B1 and point C1, respectively, the distance from the injection bore A of the fuel injector 18 to the point B1 along the fuel center line F and the distance from the injection bore A of the fuel injector 18 to the point C1 along the fuel center line F are defined as L1 and L2 respectively, then, the spray penetration L is defined as an average of L1 and L2 (i.e. L = (L1 + L2)/2).

For actually measuring the spray cone angle θ and the spray penetration L, a laser sheet method may be used, for example. Specifically, firstly, a sample of dry solvent, which is similar to actual fuel in its property or properties, is used as a fluid to be injected from the fuel injector 18, and the pressure of the sample is set at a predetermined value (for example, 7MPa) under normal temperature conditions. Further, the inside of a pressure vessel provided with a laser-transmittable window and a measuring window for filming spray is pressurized to 0.25 MPa for example, which is assigned to an ambient pressure. Then, under normal temperature conditions, the fuel is injected by inputting trigger pulse signals at a predetermined pulse width to the injector 18 so that the amount of spray per pulse is 9 mm³/stroke.

Thereafter, 5 mm-thick laser light sheet is so irradiated as to pass the spray center line F of the fuel spray Fa, and spray images are photographed from a direction perpendicular to the laser light sheet plane by a high-speed camera. Then, the spray cone angle θ and penetration L of spray are determined in accordance with the definitions described above based on the image photographed 1.56 ms after the trigger pulse signal has been inputted. The spray profile in the photographed image refers to the profile of the area of particle samples in the form of droplet. The spray profile may be determined from the photographed image as a portion different in brightness because the laser sheet light illuminates the area of particle samples.

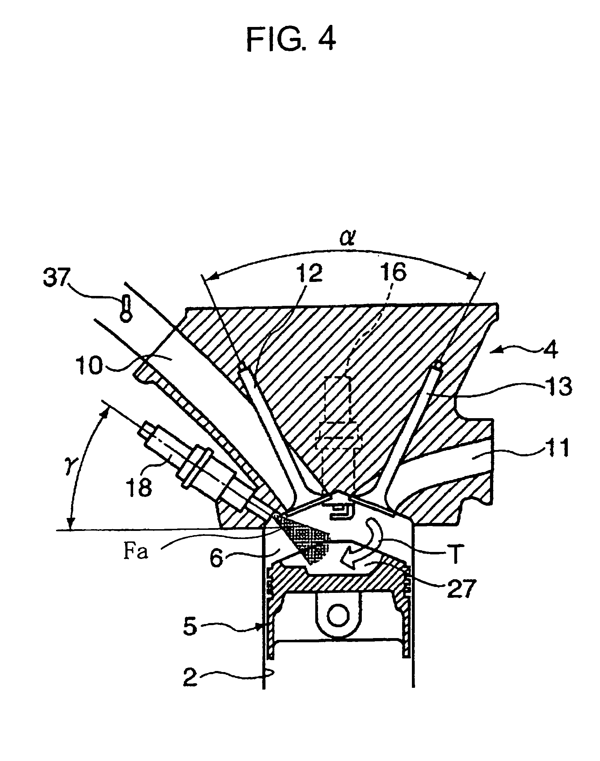

The structure of the main body of the engine 1 described above will now be described in further detail with reference to an enlarged cross-sectional view illustrated in FIG. 4. The intake port 10 extends straight and diagonally from the combustion chamber 6 and opens on one side surface of the main body of the engine 1 (or on the left-side surface thereof in FIG. 4). Two intake ports 10 (one of which is illustrated) are individually provided for a cylinder 2. The intake ports 10 are parts of tumble generating means which cause intake air introduced into the combustion chamber 6 through the intake port 10 to behave as a tumble flow T. As illustrated in FIG. 4, the tumble flow T turns clockwise (or in the direction indicated by an arrow in FIG. 4) in the cross-sectional view which depicts the intake port 10 on the left side and the exhaust port 11 on the right side in the combustion chamber 6.

The fuel injector 18 injects fuel in the direction at an angle different from 0°, preferably substantially opposite to the tumble flow T. That is, in the cross sectional view as illustrated in FIG. 4, the fuel injector 18, disposed on the left side in the combustion chamber 6, injects fuel in the rightward and downward direction, so that the injected fuel directs or confronts against the tumble flow T above the top surface of the piston 5 and/or intersects the tumble flow T at an obtuse angle (or an angle comprised between 90° and 180°).

The slant angle of the two slant faces constituting the roof of the combustion chamber 6 are so set that the angle between the axes of the intake valve 12 and the exhaust valve 13 (or valve included angle) α are relatively greater angle, for example equal to 35 ° or more. Such a great angle between the slant faces prevents the intake port 10 and exhaust port 11 from tightly bending, so as to reduce the flow resistance of the intake air and exhaust gas.

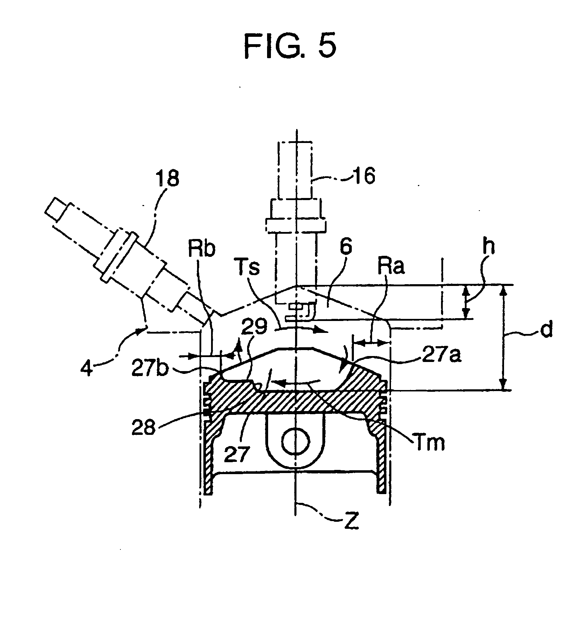

Here, a component flowing alongside of the roof of the combustion chamber 6 is defined as a first component Ts of the tumble flow T (FIG. 6), and a component flowing alongside of the bottom of the combustion chamber 6 is defined as a second component Tm of the tumble flow (FIG. 7). As illustrated in the cross-sectional view of FIG. 5, the top surface of the piston 5 is formed with a cavity 27 extending to both sides of the cylinder axis Z and including an approximately horizontal bottom surface substantially along which the second component Tm flows. On the left side (or on the fuel-injector or intake-valve side) of the cylinder axis Z in the cavity 27, a step or stepped portion or slanted surface 28 is provided on the bottom surface of the cavity 27 for directing the second component Tm upwardly or toward the spark-plug 16. The step 28 continues to a shelf or elevated portion 29 preferably extending substantially in parallel with the bottom surface of the cavity 27, or extending approximately horizontally. The shelf 29 is (axially positioned) below the level of the opening ridge of the cavity 27, and is located below the level of mating surfaces of the cylinder block 3 and the cylinder head 4 at the top dead center (TDC) of the compression stroke of the piston 5.

In addition, when the piston is in place at the starting timing of the fuel injection in the stratified-combustion operation mode, the top edge of the shelf 29 is located below the fuel-spray area. Moreover, when the distance h is defined (FIG. 5) as the height difference between the top of the roof of the combustion chamber 6 and the electrode at the lower end of the spark plug 16 disposed on the roof of the combustion chamber 6, and the distance d is defined as the height difference between the top of the roof of the combustion chamber 6 and the level of bottom surface of the cavity 27 in the piston 5 at the top dead center of the compression stroke, preferably h is one half of d or less (h≤d/2). Further, other dimensions such as the amount of the protrusion of the spark plug 16 and a tilt angle γ of the fuel injector 18 are so set (FIG. 4) that the electrode of the spark plug 16 is located above the fuel-spray area.

The cavity 27 formed on the top surface of the piston 5 is so configured that the distance Ra between a right opening ridge 27a and the periphery of the piston 5 is greater than the distance Rb between a left opening ridge 27b and the periphery of the piston 5 in the cross-sectional view of FIG. 4 and FIG. 5 (or in the cross-section in which the tumble flow T turns clockwise). Additionally, as shown in a plan view of FIG. 6 and FIG. 7, the opening ridge 27A of the cavity 5a is generally oval or substantially elliptical in shape, with a major axis substantially oriented along the direction of the fuel injection and with a minor axis substantially perpendicular to the major axis. Further, the second component Tm and the fuel spray Fa are introduced into the cavity 27a preferably from the substantially opposite direction to each other, so that the tumble flow T and the fuel spray Fa substantially confront each other and/or intersect at an obtuse angle within the cavity 27a.

A perimeter 5a outside of the cavity 27 on the top surface of the piston 5 has a profile substantially in parallel with and corresponding to the slant faces of the roof of the combustion chamber 6, which the perimeter 5a confronts or corresponds to. A gap between a perimeter 5a of the top surface of the piston 5 and the roof of the combustion chamber 6 is squished by them during a term prior to a top-dead-center (TDC) in the cylinder 2, for example a term from BTDC 40 ° CA to TDC. "TDC" and "BTDC" refer to "top dead center" and "before top dead center", respectively, and "CA" refers to "crank angle".

Referring again to FIG. 1, an intake-air passage 31 is connected to one side surface of the main body of the engine 1 and communicates with the intake port 10 for the corresponding cylinder 2. On the other hand, an exhaust-gas passage 32 is connected to the other side of the main body of the engine 1 and communicates with the exhaust port 11 for the corresponding cylinder 2.

The intake-air passage 31 delivers intake air preferably filtered through an air cleaner (not illustrated) into the combustion chamber 6 of the corresponding cylinder 2 of the main body 1. From the upstream side of an airflow, an air-flow sensor 33 of hot-wire type for detecting the amount of intake air, a preferably electric-controlled throttle valve 34 driven by an electric motor 35 to open and close, and a surge tank 36 are disposed in the intake-air passage 31. The downstream side of the surge tank 36 of the intake-air passage 31 branches out into individual intake-air passages for each cylinder 2. Each individual passage is further separated into two passages at its end to communicate with the two intake ports 10, respectively.

In an upstream portion of each of the two intake ports 10, a tumble control valve 37 is provided for adjusting strength of the tumble flow T in the combustion chamber 6. The tumble control valve 37 is operated to open and close by an actuator 38 like a stepping motor, for example. The tumble control valve 37 is of a disciform or disk-shaped butterfly valve formed with a notch. For example, the notch is formed at a lower portion of a rotational axis of the valve. When the tumble control valve 37 is fully closed, intake air passes through the notch, so as to generate a strong tumble flow T in the combustion chamber 6. The tumble flow T becomes weaker gradually as the tumble control valve 37 is opened.

Shapes of the intake port 10 and the tumble control valve 37 are not limited to ones described above. For example, the intake port 10 may be of a so-called common port type with one branch portion at which the passage is separated into respective ports. In this case, the tumble control valve 37 may be formed into a shape fittable to the cross-section of the common port and being partly notched.

On the other hand, the exhaust-gas passage 32 discharges combusted gas from the combustion chamber 6 to the outside. At the upstream end of the exhaust-gas passage 32, an exhaust-gas manifold 39 is provided which communicates with the corresponding exhaust port 11 for each cylinder 2. In a collecting portion of the exhaust-gas manifold 39, a linear O₂ sensor 40 is provided for detecting oxygen concentration of the exhaust gas, which preferably generates linear output for oxygen concentration over the predetermined air/fuel ratio range including the stoichiometric air/fuel ratio. Oxygen concentration of the exhaust gas detected by the linear O₂ sensor 40 is used for determining the air/fuel ratio.

To the collecting portion of the exhaust-gas manifold 39, the upstream end of an exhaust-gas pipe 41 is connected. In the downstream portion of the exhaust-gas pipe 41, a NOx purification catalyst 42 and a three-way catalyst 43 are provided for purifying the exhaust gas. Between both the catalysts 42 and 43, an exhaust-gas temperature sensor 44 is provided for detecting the temperature of the exhaust-gas. To the upstream portion of the exhaust-gas pipe 41, the upstream end of an EGR (or exhaust gas recirculation) passage 45 is connected, which partially returns the exhaust-gas from the exhaust-gas passage 32 to the intake-air passage 31. The downstream end of the EGR passage 45 is connected to the portion between the electric-controlled throttle valve 34 and the surge tank 36 of the intake-air passage 31. At the midstream portion of the EGR passage 45, a preferably electric-controlled EGR valve 46 and an EGR cooler 47 are provided. The electric-controlled EGR valve 46 is driven to open and close for adjusting the amount of the returning exhaust gas, and the EGR cooler 47 cools the exhaust-gas.

The ignition circuit 17, the fuel injector 18, the fuel delivery system 20, an electric motor 35 for driving the electric-controlled throttle valve 34, the actuator 38 for driving the tumble control valve 37, and electric-controlled EGR valve 46 are controlled by an engine control unit (referred to as ECU) 50. The ECU 50 receives signals from the crank angle sensor 9, the air-flow sensor 33, the O₂ sensor 40, the exhaust-gas temperature sensor 44, an acceleration-pedal position sensor 48 for detecting acceleration pedal travel (or operation amount of the acceleration pedal), and/or a rotational speed sensor 49 for detecting rotational speed of the engine 1.

Based on the signals from the sensors, the ECU controls the amount of injected fuel, the injection timing, and the fuel spray pressure to be achieved by the fuel injector 18, the amount of the intake-air by adjusting the throttle valve 34, the strength of the tumble flow by adjusting the tumble control valve 37, and the amount of the returning exhaust-gas by adjusting the electric-controlled EGR valve 46 according to the engine-operational condition, respectively.

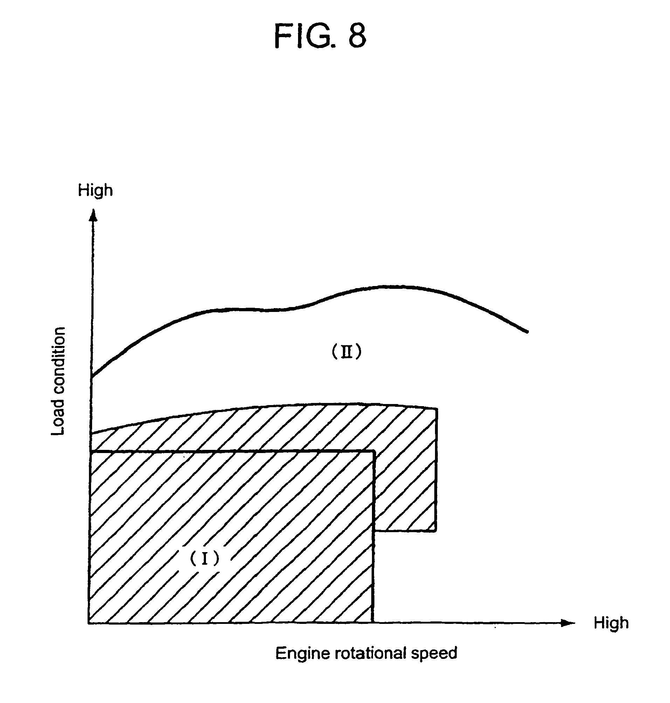

Particularly, as illustrated in FIG. 8 showing a control map in an engine warmed-up state, while the operational condition is inside of the rectangular region (I) of low engine load and low engine-rotational speed defined by bold lines, the engine operates on the stratified combustion mode, namely, the fuel injector 18 injects fuel within a period during the compression stroke of the cylinder 2 (within the period from about 40 ° to about 140 ° before the top dead center (BTDC), for example) so that the mixture concentrates in the proximity of the spark plug 16 and combusts. In this stratified combustion mode, the throttle valve 34 is controlled to open relatively mode widely for providing leaner air-fuel ratio and for reducing intake loss. Particularly, at this time, the average air-fuel ratio is lean of the stoichiometric air-fuel ratio (A/F > 25, for example) in the combustion chamber 6.

On the other hand, while the operational condition is in the region (II) outside of the stratified combustion region, the engine operates on the homogeneous combustion mode, namely, the fuel injector 18 injects fuel during the intake stroke of the cylinder 2 so that the fuel fully mixes with the intake air and the resulting homogeneous mixture in the combustion chamber 6 combusts. In this homogeneous combustion mode, the amount of the injected fuel and the opening of the throttle valve 34 are controlled so that the air-fuel ratio of the mixture is approximately stoichiometric air-fuel ratio (or A/F = 14.7) in most part of the region. In the full-load condition, however, the air-fuel ratio is adjusted to rich of the stoichiometric air-fuel ratio (A/F = 13, for example) to achieve high output in compliance with high load.

In the hatched region of FIG. 8 in the engine warmed-up state, the electric-controlled EGR valve 46 is opened for returning a part of the exhaust-gas from the exhaust-gas passage 45 to the intake-air passage 31. Then, the opening of the EGR valve 46 is controlled so that a ratio of the returning exhaust-gas (referred to as the EGR ratio) decreases at least for higher load, according to the engine load and the engine rotational-speed. This reduces the NOx production without impairing the combustion stability of the engine 1.

In an engine cold state, the engine 1 operates on the homogeneous combustion mode, or the intermediate mode between the homogeneous combustion mode and the stratified combustion mode, and the electric-controlled EGR valve 46 is fully closed, for ensuring the combustion stability by the highest priority. The EGR ratio may be determined as the ratio of the amount of returning exhaust-gas from the EGR passage 45 to the intake-air passage 31 to the amount of the fresh air. Here, "fresh air" refers to the introduced air into the cylinder 2, from which the returning exhaust-gas and the fuel gas are excluded.

In accordance with the direct-injection spark-ignition engine in this embodiment described above, while the engine is operating on the stratified combustion mode, the average air-fuel ratio is lean of the stoichiometric air-fuel ratio in the combustion chamber 5 and the fuel injector 18 injects fuel at the late-stage of the compression stroke. Accordingly, the mixture is concentrated in the proximity of the spark plug 16 and ignited, providing the stratified combustion.

In this case, the air introduced through the intake-port 10 behaves as the tumble flow T in the combustion chamber 6 and stratifies the mixture in the proximity of the spark plug 16. More particularly, as illustrated in the cross-sectional view of FIG. 4 and FIG. 5, the tumble flow T flows from the left (or intake-valve side) to the right (or exhaust-valve side) along the roof surface in the upper area of the combustion chamber 6, and turns downwardly in the right peripheral portion of the combustion chamber. The tumble flow T then flows from the right (or exhaust-valve side) to the left (or intake-valve side) along the cavity 27 on the top surface of the piston 5 in the bottom area of the combustion chamber 6, turns upwardly guided by the step 28, and flows upwardly (or towards the roof surface) along the left peripheral portion of the combustion chamber 6.

The fuel injector 18 injects fuel so that the fuel confronts against the second tumble component Tm flowing along the cavity 27 on the top surface of the piston 5. As a result, the fuel spray Fa and the second component Tm flows substantially towards each other, and collide with each other within the cavity 27. Then, the fuel is promoted to atomize, and the fuel spray Fa reduces its velocity after colliding with the second tumble component Tm and sufficiently mixes with air, so that the mixture hovers near the center of the combustion chamber 6.

Thereafter, the mixture produced by the collision of the fuel spray Fa and the second component Tm is moved upwardly and concentrated in the proximity of the spark plug 16 to be properly stratified around the spark plug 16. The upward movement of the mixture is achieved by the step 28 formed on the left side of the cylinder axis Z for turning the second tumble component Tm upwardly in the cross-sectional view where the tumble flow T turns clockwise.

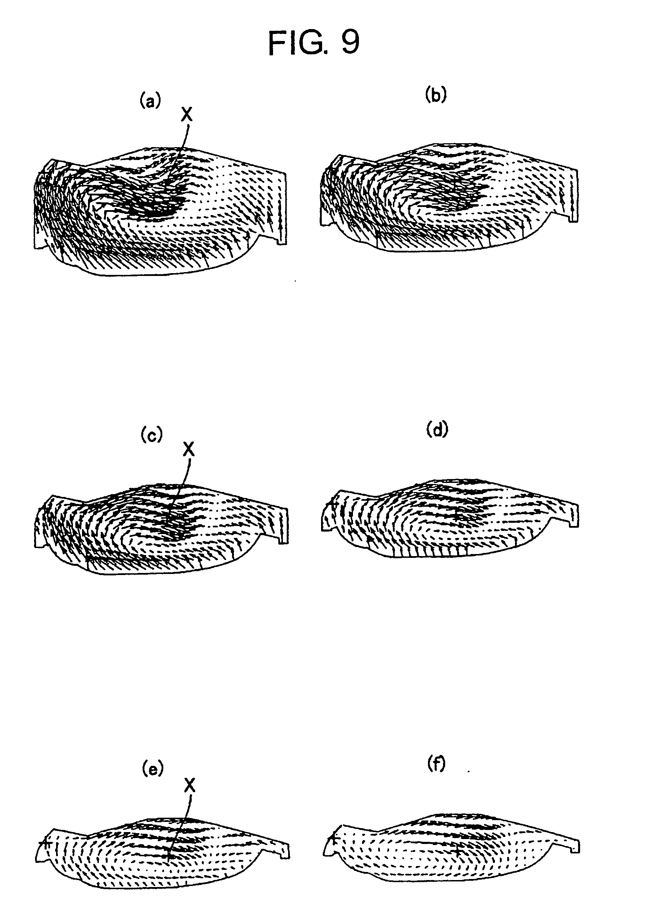

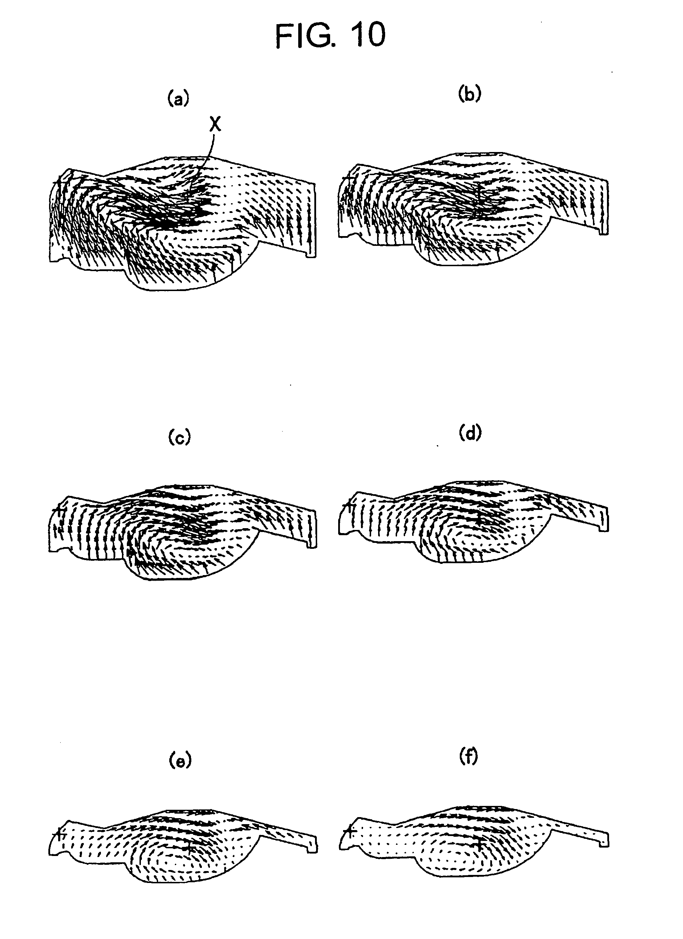

Illustrated in FIG. 9 (a) to (f) and FIG. 10 (a) to (f) are the data depicting the change in the tumble flow T from 310 ° to 360 ° CA after TDC, for a comparison example with only a cavity 27 over the top surface of the piston, and for the embodiment of the present invention with the step 28 on the top surface of the piston. The data were obtained by the analysis through CFD (or computational fluid dynamics). These data confirm that in the comparison example without the step 28, the tumble flow T has a tendency of being widely diffused in the combustion chamber 6 and disappearing as shown in FIG. 9 (a) to (f), on the other hand, in the embodiment of the present invention with the step 28 on the top surface of the piston 5, the tumble flow T remains turning around the electrode X of the spark plug 16 over a long period as shown in FIG. 10 (a) to (f).

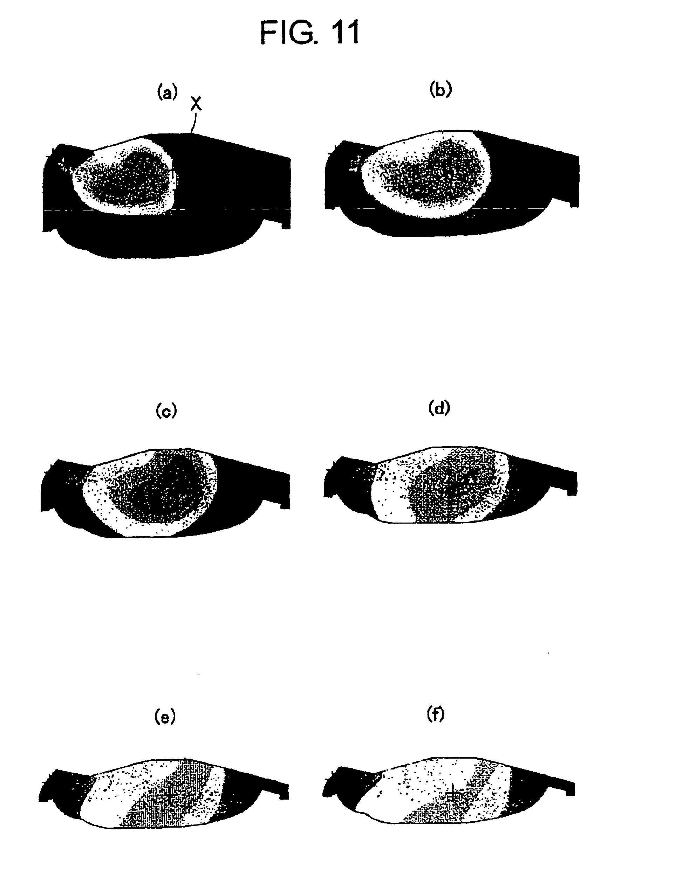

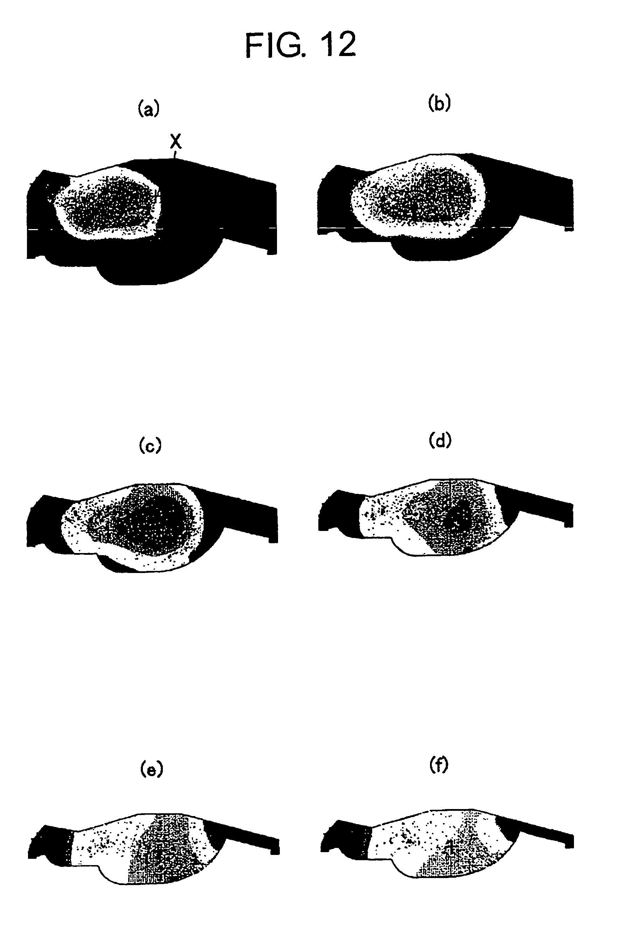

Additionally, illustrated in FIG. 11 (a) to (f) and FIG. 12 (a) to (f) are the data showing the change in the fuel spray under the influence of the tumble flow T for the comparison example and for the embodiment of the present invention. These data confirm that in the comparison example without the step 28, the fuel spray Fa diffuses early as shown in FIG. 11 (a) to (f), on the other hand, in the embodiment of the present invention with the step 28 on the top surface of the piston 5, the relatively richer mixture remains in the vicinity of the electrode X of the spark plug 16 over a long period as shown in FIG. 12 (a) to (f).

Accordingly, in a direct-injection spark-ignition engine in which the fuel is injected so as to confront against the tumble flow T produced in the combustion chamber 6 and the mixture is stratified in the vicinity of the spark plug 16 and ignited in the stratified combustion mode, the forming of the cavity 27 having the bottom surface along which the tumble flow T flows and extending to both sides of the cylinder axis Z on the top surface of the piston, and the forming of the step 28 on the left side of the cylinder axis Z on the bottom surface of the cavity 27 for guiding the tumble flow T upwardly in the cross-section in which the tumble flow T turns clockwise, beneficially maintain the adequate ignitionability of the mixture and improve fuel efficiency, without any structure for causing the fuel spray Fa to substantially collide with the top surface of the piston 5 in the stratified combustion mode with a tendency of low fuel spray pressure and the weak tumble flow T.

That is, in the stratified combustion mode with low engine load and low engine rotational speed, the fuel spray pressure is reduced because of less amount of the fuel injection, and the strength of tumble flow T represented by the tumble ratio is reduced because of less amount of the intake-air. Accordingly, the area of the mixture with sufficient fuel concentration for the spark plug 16 to ignite is small and the mixture with such concentration tends to remain for a short period of time, even when the fuel spray Fa and the second tumble component Tm are arranged so as to flow substantially towards each other and collide with each other in the cavity 27. Here, the tumble ratio is defined as a value obtained by the following calculation:
Firstly, measuring the velocity change in the vertical component of the intake-air flow in the cylinder 2 and integrating the measured value. Then, dividing the integrated value by the angular velocity of the crank shaft 7.

Conventionally, to cope with the above, the fuel injection is advanced before the timing for the best fuel efficiency, or the amount of the protrusion of the spark plug 16 is increased for maintaining the ignitionability in the stratified combustion mode. However, the fuel injection advance reduces fuel efficiency, and the increase in the protrusion of the spark plug 16 impairs the reliability of the spark plug 16 because of the fuel droplets depositing on the electrodes.

In contrast, in the present invention, the cavity 27 having the bottom surface along which the tumble flow T flows and extending to both sides of the cylinder axis Z is formed on the top surface of the piston, and the step 28 is formed on the left side of the cylinder axis Z on the bottom surface of the cavity 27 for guiding the tumble flow T upwardly in the cross-section in which the tumble flow T turns clockwise, so that the mixture produced by the collision of the fuel spray Fa and the second component Tm is guided upwardly to concentrate in the vicinity of the spark plug 16. Accordingly, the mixture can be stratified in the vicinity of the spark plug 16 properly over an extended time period without increasing the amount of the protrusion of the spark plug 16. As a result, the adequate ignitionability of the mixture is kept and fuel efficiency is improved without problems of impaired fuel efficiency due to the fuel injection advance or the depositing of the fuel droplets on the electrode of the spark plug 16 due to the increased amount of the protrusion of the spark plug 16.

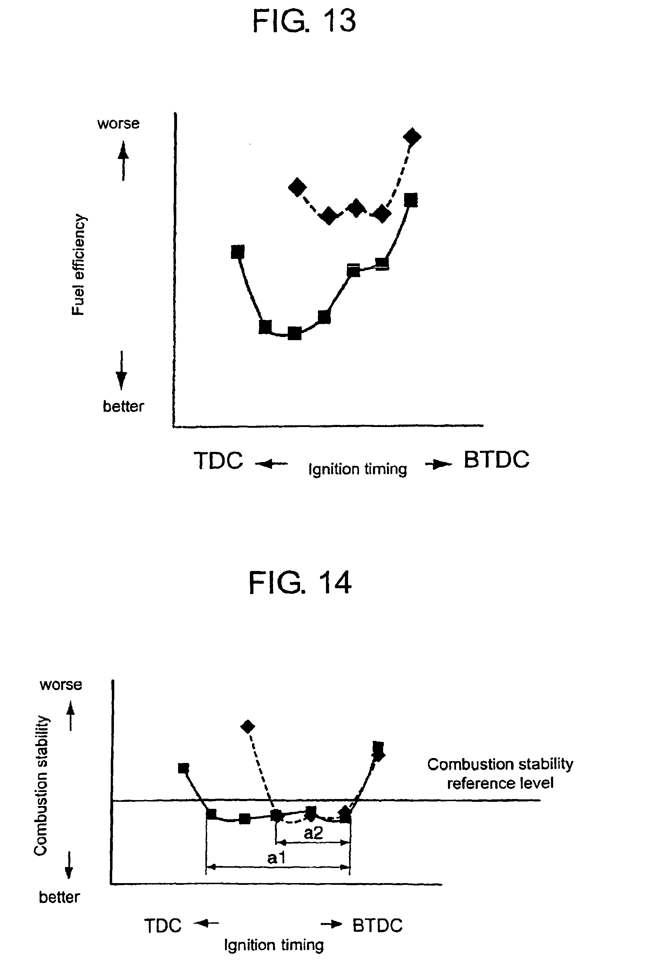

To confirm the action and effect by the forming of the step 28 on the left side of the cylinder axis Z for guiding the tumble flow T upwardly, experiments were performed for revealing the difference in fuel efficiency and combustion stability between the comparison example with only a cavity 27 over the top surface of the piston 5 and the embodiment of the present invention with the step 28 on the top surface of the piston. The results of the experiment are illustrated in FIG. 13 and FIG. 14.

FIG. 13 compares the change in fuel efficiency with respect to the crank angle (CA) for the ignition timing over the predetermined period of time before the top dead center (BTDC) between the comparison example and the embodiment of the present invention. In the figure, the broken line indicates the data of the comparison example and the solid line indicates the data of the embodiment of the present invention. These data confirm that the present invention can improve fuel efficiency over the comparison example by setting the ignition timing close to the timing for best fuel efficiency.

FIG. 14 compares the change in combustion stability with respect to the ignition timing between the comparison example and the embodiment of the present invention. In the figure, the broken line indicates the data of the comparison example and the solid line indicates the data of the embodiment of the present invention. These data confirm that in the present invention which properly achieves the stratified mixture in the vicinity of the spark plug 16, the time period for adequate combustion stability, or the allowable range of the ignition timing a1 within which the combustion stability exceeds the reference level is significantly wider than the allowable range for the ignition timing a2 of the comparison example.

In particular, in the case that the two slanted surfaces constituting the roof of the combustion chamber 6 are at relatively larger angle so that the angle between the axes of the intake valve 12 and the exhaust valve 13 (or valve included angle) α is 35 ° or more for the purpose of reducing the bend of the intake port 10 and the exhaust port 11 to decrease the resistance of the intake air and the exhaust gas, the advantage by the constitution above is remarkably obtained, because the electrode of the spark plug 16 is disposed at the upper area of the combustion chamber 6 and the time period for the adequate combustion stability by the mixture layer properly formed in the proximity of the electrode tends to shorten.

That is, in the present invention, the step 28 is formed on the left side of the cylinder axis Z on the bottom surface of the cavity 27 for guiding the tumble flow T upwardly in the cross-section described above so that the mixture produced by the collision of the fuel spray Fa and the second component Tm is guided upwardly. Accordingly, the present invention provides the remarkable advantage of effectively preventing the shortening of the time period for the adequate combustion stability, even with the electrode of the spark plug 16 disposed on the upper are of the combustion chamber 6.

In addition, in the embodiment described above, the shelf 29 is provided which continues from the upper edge of the step 28 formed on the top surface of the piston 5, extends in parallel with the bottom surface of the cavity 27, and is located below the level of the opening ridge of the cavity 27, in the cross-section in which the tumble flow T turns clockwise. Accordingly, in the stratified combustion mode, the fuel injected by the fuel injector 18 during the compression stroke is prevented from depositing on the step 28 and the shelf 29 formed on the top surface of the piston, without impairing the guiding effect for the tumble flow T by means of the step 28 formed on the top surface of the piston. As a result, the reductions in fuel efficiency and emission performance due to the fuel droplets depositing on the top surface of the piston 5 are avoided without impairing the combustion stability.

Moreover, in the case that the top edge of the shelf 28 is located below the fuel-spray area when the piston 5 is in place at the starting timing of the fuel injection in the stratified-combustion operation mode as described in the embodiment, the fuel injected by the fuel injector 18 during the compression stroke is effectively prevented from depositing on the top surface of the piston 5 in the stratified combustion mode, without impairing the guiding effect for the tumble flow T by means of the step 28 formed on the top surface of the piston 5. As a result, the reductions in fuel efficiency and emission performance due to the fuel droplets depositing on the top surface of the piston are effectively avoided without impairing the combustion stability.

Further, in a direct-injection spark-ignition engine in which the fuel is injected so as to substantially confront against the tumble flow T (or intersect it at an obtuse angle) produced in the combustion chamber 6 and the mixture is stratified in the vicinity of the spark plug 16 and ignited in the stratified combustion mode, the setting of the distance Ra between the right opening ridge 27a of the cavity 27 on the top surface of the piston and the periphery of the piston to be greater than the distance Rb between the left opening ridge 27b and the periphery of the piston in the cross-section in which the tumble flow T turns clockwise can prevent the tumble center from shifting to the right (or away from the fuel-injector side or toward the exhaust valve side) during the compression stroke, which effectively suppress the weakening of the tumble flow T.

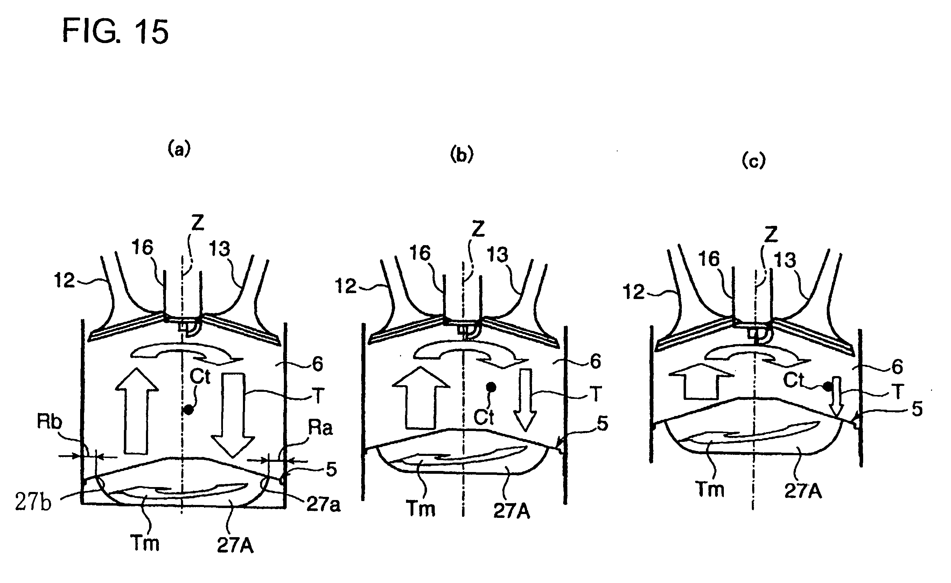

Particularly, in the comparison example as illustrated in FIG. 15 in which the distance Ra between the right opening ridge 27a of the cavity 27 on the top surface of the piston 5 and the periphery of the piston is approximately equal to the distance Rb between the left opening ridge 27b and the periphery of the piston, the tumble center Ct is substantially on the cylinder axis Z at the early stage of the compression stroke during which the piston 5 is close to the bottom dead center. Then, the strength of the tumble flow T flowing downwardly at the right side of the axis and the strength of the tumble flow T flowing upwardly at the left side of the axis are approximately equal to each other as shown in FIG. 15 (a). As the piston 5 ascends, the upward tumble flow T on the left side is strengthened by the piston 5, on the other hand, the downward tumble flow T on the right side is blocked by the upward airflow caused by the ascending piston 5 in the combustion chamber 6. As a result, the tumble center Ct gradually shifts to the right (or exhaust-valve side) as illustrated in the FIG. 15 (b) to (c).

Additionally, in the comparison example, the tumble ratio increases from the bottom dead center until the middle stage of the compression stroke, but decreases after the middle stage of the compression stroke because the downward tumble flow T at the right area in the combustion chamber 6 is significantly weakened. Then, at the fuel injection timing, the tumble ratio is significantly reduced and the tumble flow T greatly decays.

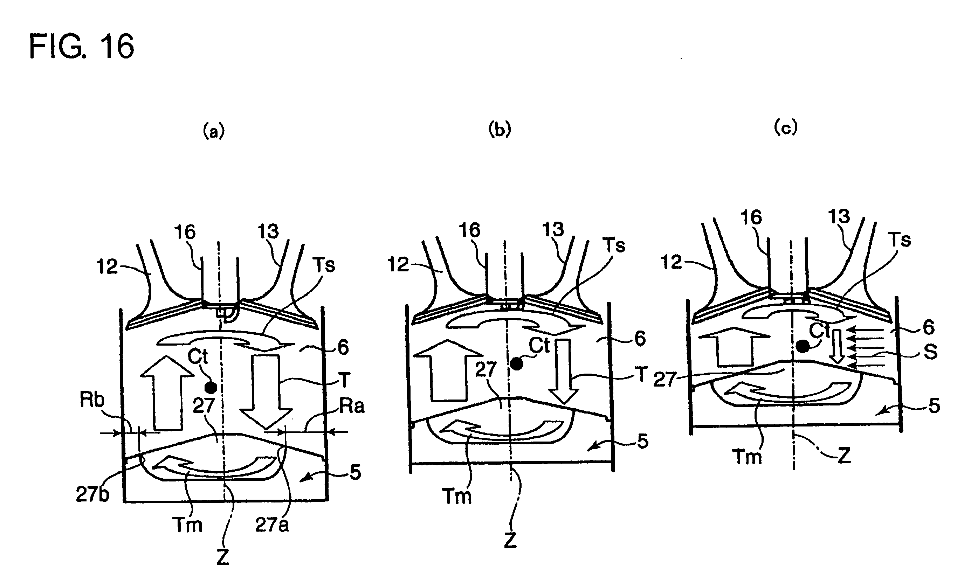

On the other hand, in the present invention as illustrated in FIG. 16 in which the distance Ra between the right opening ridge 27a of the cavity 27 on the top surface of the piston 5 and the periphery of the piston to be greater than the distance Rb between the left opening ridge 27b and the periphery of the piston in the cross-section above, the tumble center Ct is located on the left side of the cylinder axis Z at the early stage of the compression stroke during which the piston 5 is close to the bottom dead center as shown in FIG. 16 (a).

As the piston 5 ascends, the tumble center Ct slightly shifts to the right. However, because the initial position of the tumble center Ct is on the left side (or exhaust-valve side), the tumble center Ct does not greatly distant from the cylinder axis Z. Thereafter, as the piston 5 reaches near the top dead center, a strong squish flow S is produced above the right portion of the piston 5. The squish flow S also prevents the tumble center Ct from shifting to the right (or exhaust-valve side), so that the tumble center Ct remains in the vicinity of the cylinder axis Z as shown in FIG. 16 (b) and (c).

Moreover, in the present invention, the squish flow S strengthens the second tumble component Tm flowing along the bottom of the combustion chamber 6 after the middle stage of the compression stroke, so that the reduction in the tumble ratio is suppressed and the tumble flow T fully remains until the fuel injection timing. Then, because the tumble center Ct remains near the center of the cylinder 6, the colliding location of the fuel spray and the tumble flow T is prevented from shifting to the peripheral side and the tumble flow T remains strong. In compliance to the tumble behavior, the required fuel-spray pressure is increased and the fuel injection is performed with the required pressure increased. Accordingly, the fuel spray Fa and the tumble flow T intensively collide or interact with each other, which beneficially promotes the fuel to atomize and adequately concentrates the mixture in the proximity of the spark plug 16.

In addition, the increase in the fuel spray pressure shortens the time period for injecting sufficient amount of the fuel, so that the injection timing can be retarded for the required amount of the fuel. This injection timing retard suppresses the diffusion of the fuel, which is advantageous to the stratification of the mixture.

It should be appreciated that the constitution in which the distance Ra between the right opening ridge 27a of the cavity 27 on the top surface of the piston 5 and the periphery of the piston 5 to be greater than the distance Rb between the left opening ridge 27b and the periphery of the piston 5 in the cross-section above, and the constitution in which the step 28 is formed on the left side (intake-valve side or fuel injector side) of the cylinder axis Z in the cavity 27 for guiding the tumble flow T upwardly as shown in FIG. 5, may be preferably combined. This combination suppresses the weakening of the tumble flow T and maintains its tumble center Ct close to the center of the combustion chamber 6, so as to adequately stratify the mixture as a result of the collision of the tumble flow T and the fuel spray Fa.

As described above, in accordance with a preferred embodiment of the present invention, there is provided the direct-injection spark-ignition engine 1 in which the intake system is so configured to produce the tumble flow T in the combustion chamber 6, the central portion of the roof of the combustion chamber 6 is located at the higher level than its peripheral portion, the spark plug 16 is disposed in the central portion, the fuel injector 18 is disposed on the left side of the central portion, and the fuel injector 18 injects fuel so that the fuel substantially confronts against or intersects the tumble flow T produced in the combustion chamber 6 in such a manner that the mixture is concentrated in the proximity of the spark plug 16 and ignited, in the cross-section in which the tumble flow T turns clockwise, wherein, the cavity 27 having the bottom surface along which the tumble flow T flows and extending to both sides of the cylinder axis is formed on the top surface of the piston 5, and the step or stepped portion or slanted portion 28 is formed on the left side (or fuel injector side) of the cylinder axis on the bottom surface of the cavity 27 for guiding the tumble flow T upwardly or toward the spark plug 16, in the cross-section above. According to the constitution, a simple piston structure is attained for a direct-injection spark-ignition engine 1 which can properly stratify the mixture in the proximity of the spark plug 16 in the stratified-combustion operation, without impairing the reliable ignition of the spark plug 16.

As described above, in accordance with a further preferred embodiment of the present invention, there is provided the direct-injection spark-ignition engine 1 in which the intake system is so configured to produce the tumble flow T in the combustion chamber 6, the central portion of the roof of the combustion chamber 6 is located at the higher level than its peripheral portion, the spark plug 16 is disposed substantially in the central portion, the fuel injector 18 is disposed on the left side (or intake-valve side) of the central portion, and the fuel injector 18 injects fuel so that the fuel substantially confronts against and/or intersects at an obtuse angle the tumble flow T produced in the combustion chamber 6 in such a manner that the mixture is concentrated in the proximity of the spark plug 16 and ignited, in the cross-section in which the tumble flow T turns preferably clockwise, wherein, the distance the distance between the right opening ridge 27a of the cavity 27 on the top surface of the piston 5 and the periphery of the piston 3 is greater than the distance between the left opening ridge 27b (or opening ridge at the exhaust-port side or opposed to the fuel injector side) and the periphery of the piston 5 in the cross-section above. According to the constitution, in the stratified combustion mode, the center of the tumble flow T is effectively prevented from shifting to the right or away from the fuel injector in the cross-section above and the weakening of the tumble flow T is suppressed, so that the strong tumble flow T with its tumble center close to the center of the combustion chamber 6 remains until the fuel injection timing, thereby adequately stratifying the mixture as a result of the collision of the tumble flow T and the fuel spray Fa.

## Claims

1. A direct-injection spark-ignition engine (1) comprising a piston (5), in which its intake system (10, 27, 28) is so configured to produce a tumble flow (T) in a combustion chamber (6) and comprising a fuel injector (18) disposed on the peripheral portion of a roof of the combustion chamber (6), wherein, the piston (5) is formed with:
a cavity (27) having a bottom surface along which the tumble flow (T) can flow and extending to both sides of the cylinder axis (Z) on the top surface of the piston (5); and
a step (28) provided on the bottom surface of the cavity (27) for guiding the tumble flow (T) upwardly;
**characterized in that**
said step (28) is provided on a fuel-injector side of the cylinder axis (Z); and
the fuel injector (18) injects fuel so that injected fuel substantially confronts against and/or intersects at an obtuse angle the tumble flow (T) flowing along the cavity (27) on the top surface of the piston (5) in such a manner that the mixture is concentrated in the proximity of a spark plug (16) and ignited.

2. A direct-injection spark-ignition engine as defined in claim 1, wherein,
a shelf (29) is provided on the top surface of the piston (5) which continues from the upper edge of said step (28) formed on the top surface of the piston (5) and extends substantially parallel with the bottom surface of the cavity (27).

3. A direct-injection spark-ignition engine (1) as defined in claim 2, wherein,
the top edge of said shelf (29) is located below the fuel-spray area when the piston (5) is in place at the starting timing of the fuel injection in the stratified-combustion operation mode of the direct-injection spark engine (1).

4. A piston (5) for a direct-injection spark-ignition engine (1) as defined in claim 2 or 3, wherein the shelf (29) is located below the level of the opening ridge (27a, 27b) of said cavity (27).

5. A direct-injection spark-ignition engine (1) as defined in one of the preceding claims, wherein,
the distance (Ra) between an opening ridge (27a) on the opposite side to the fuel-injector side of said cavity (27) and the periphery of the piston (5) is greater than the distance (Rb) between an opening ridge (27b) on the fuel-injector side of said cavity (27) and the periphery of the piston (5).

6. A direct-injection spark-ignition engine (1) according to claim 1 to 5, wherein a central portion of a roof of the combustion chamber (6) is located at the higher level than its peripheral portion, a spark plug (16) is disposed in the central portion, and a fuel injector (18) is disposed on the lateral side of the central portion.

## Patentansprüche

1. Verbrennungskraftmaschine (1) mit Benzindirekteinspritzung, umfassend einen Kolben (5), in welchem sein Einlaßsystem (10, 27, 28) so konfiguriert ist, um einen Taumel- bzw. Wirbelstrom bzw. -fluß (T) in einer Verbrennungskammer (6) zu erzeugen, und umfassend eine Kraftstoffeinspritzeinrichtung (18), welche an dem Umfangsabschnitt eines Dachs der Verbrennungskammer (6) angeordnet ist, wobei der Kolben (5) ausgebildet ist mit:
einem Hohlraum (27), welcher eine Bodenfläche bzw. -oberfläche aufweist, entlang welche der Taumelstrom (T) fließen bzw. strömen kann, und welcher sich zu beiden Seiten der Zylinderachse (Z) an der oberen Fläche bzw. Oberfläche des Kolbens (5) erstreckt; und
eine Stufe (28), welche an der Bodenfläche des Hohlraums (27) zum Führen des Taumelstroms (T) nach oben vorgesehen bzw. zur Verfügung gestellt ist;
**dadurch gekennzeichnet, daß**
die Stufe (28) an einer Seite der Kraftstoffeinspritzeinrichtung der Zylinderachse (Z) vorgesehen ist; und
die Kraftstoffeinspritzeinrichtung (18) Kraftstoff derart einspritzt, so daß eingespritzter Kraftstoff im wesentlichen gegen den Taumelstrom (T) aufprallt bzw. diesem gegenüberliegt und/oder diesen unter einem stumpfen Winkel schneidet, welcher entlang des Hohlraums (27) an der oberen Fläche des Kolbens (5) in einer derartigen Weise fließt bzw. strömt, daß die Mischung in der Nähe einer Zündkerze (16) konzentriert und gezündet ist bzw. wird.

2. Verbrennungskraftmaschine mit Benzindirekteinspritzung nach Anspruch 1, wobei ein Vorsprung bzw. Sockel (29) an der oberen Fläche bzw. Oberfläche des Kolbens (5) vorgesehen ist, welcher sich von dem oberen Rand bzw. Kante der Stufe (28) fortsetzt, welche auf bzw. an der oberen Fläche des Kolbens (5) ausgebildet ist, und sich im wesentlichen parallel zu der Bodenfläche des Hohlraums (27) erstreckt.

3. Verbrennungskraftmaschine (1) mit Benzindirekteinspritzung nach Anspruch 2, wobei der obere Rand bzw. Kante des Sockels (29) unter dem Kraftstoffsprüh bzw. - nebelbereich angeordnet ist, wenn sich der Kolben (5) an der Stelle zum Startzeitpunkt der Kraftstoffeinspritzung in dem Betriebsmodus einer geschichteten Verbrennung der Verbrennungskraftmaschine (1) mit Benzindirekteinspritzung befindet.

4. Kolben (5) für eine Verbrennungskraftmaschine (1) mit Benzindirekteinspritzung nach Anspruch 2 oder 3, wobei der Sockel (29) unterhalb der Höhe bzw. des Niveaus des Öffnungsrands bzw. -grats (27a, 27b) des Hohlraums (27) angeordnet ist.

5. Verbrennungskraftmaschine (1) mit Benzindirekteinspritzung nach einem der vorangehenden Ansprüche, wobei
der Abstand (Ra) zwischen einem Öffnungsrand bzw. -grat (27a) an der gegenüberliegenden bzw. entgegengesetzten Seite zu der Seite der Kraftstoffeinspritzeinrichtung des Hohlraums (27) und dem Umfang des Kolbens (5) größer als der Abstand (Rb) zwischen einem Öffnungsrand bzw. -grat (27b) an der Seite der Kraftstoffeinspritzeinrichtung des Hohlraums (27) und dem Umfang des Kolbens (5) ist.

6. Verbrennungskraftmaschine (1) mit Benzindirekteinspritzung nach Anspruch 1 bis 5, wobei ein zentraler Abschnitt eines Dachs der Verbrennungskammer (6) auf dem höheren Niveau als sein Umfangsabschnitt angeordnet ist, eine Zündkerze (16) in dem zentralen Abschnitt angeordnet ist und eine Kraftstoffeinspritzeinrichtung (18) an der seitlichen Seite des zentralen Abschnitts angeordnet ist.

## Revendications

1. Moteur (1) à injection directe avec allumage par étincelle comprenant un piston (5), dans lequel son système d'admission (10, 27, 28) est configuré de manière à produire un écoulement de renversement (T) dans une chambre de combustion (6) et comprenant un injecteur de fuel (18) disposé sur la partie périphérique d'une voûte de la chambre de combustion (6), dans lequel le piston (5) est formé de :
- une cavité (27) ayant une surface de fond le long de laquelle l'écoulement de renversement (T) peut s'écouler et s'étendant vers les deux côtés de l'axe de cylindre (Z) sur la surface supérieure du piston (5) ; et
- un gradin (28) prévu sur la surface de fond de la cavité (27) pour guider l'écoulement de renversement (T) vers le haut,
**caractérisé en ce que** :
- ledit gradin (28) est prévu sur un côté d'injecteur de fuel de l'axe de cylindre (Z) ; et
- l'injecteur de fuel (18) injecte du fuel de sorte que le fuel injecté vient sensiblement à l'encontre de l'écoulement de renversement (T) s'écoulant le long de la cavité (27) sur la surface supérieure du piston (5) et/ou fait intersection avec celui-ci sous un angle obtus, d'une manière telle que le mélange est concentré à proximité d'une bougie d'allumage (16) et est allumé.

2. Moteur à injection directe avec allumage par étincelle, tel qu'il est défini dans la revendication 1, dans lequel un plateau (29) est prévu sur la surface supérieure du piston (5), lequel se poursuit depuis le bord supérieur dudit gradin (28) formé sur la surface supérieure du piston (5) et s'étend de manière sensiblement parallèle à la surface de fond de la cavité (27).

3. Moteur (1) à injection directe avec allumage par étincelle, tel qu'il est défini dans la revendication 3, dans lequel le bord supérieur dudit plateau (29) est placé en dessous de la zone de pulvérisation de fuel lorsque le piston (5) est en place au moment du commencement de l'injection de fuel dans le mode opératoire de combustion stratifiée du moteur (1) à injection directe avec allumage par étincelle.

4. Piston (5) pour un moteur (1) à injection directe avec allumage par étincelle, tel qu'il est défini dans l'une ou l'autre des revendications 2 et 3, dans lequel le plateau (29) est placé en dessous du niveau de la nervure d'ouverture (27a, 27b) de ladite cavité (27).

5. Moteur (1) à injection directe avec allumage par étincelle, tel qu'il est défini dans l'une des revendications précédentes, dans lequel la distance (Ra) entre une nervure d'ouverture (27a) sur le côté opposé au côté d'injecteur de fuel de ladite cavité (27) et la périphérie du piston (5) est plus grande que la distance (Rb) entre une nervure d'ouverture (27b) sur le côté d'injecteur de fuel de ladite cavité (27) et la périphérie du piston (5).

6. Moteur (1) à injection directe avec allumage par étincelle, selon l'une des revendications 1 à 5, dans lequel :
- une partie centrale d'une voûte de la chambre de combustion (6) est placée à un niveau plus haut que sa partie périphérique ;
- une bougie d'allumage (16) est disposée dans la partie centrale ; et
- un injecteur de fuel (18) est disposé sur le côté latéral de la partie centrale.
